# EUROPÄISCHE PATENTSCHRIFT

(11) **EP 0 708 678 B1**
(45) Veröffentlichungstag und Bekanntmachung des Hinweises auf die Patenterteilung: **14.01.1998**
(21) Anmeldenummer: 94918881.7
(22) Anmeldetag: 18.06.1994
(51) Int. Cl.: B01D 53/04

(54) **BEHÄLTER FÜR KOHLENSTOFFMOLEKULARSIEB**
CONTAINER FOR CARBON MOLECULAR-SIEVE MATERIAL
CONTENANT POUR TAMIS MOLECULAIRE AU CARBONE

(30) Priorität: 24.06.1993 DE 4320942
(43) Veröffentlichungstag der Anmeldung: 01.05.1996
(73) Patentinhaber: CarboTech-Anlagenbau GmbH, 45307 Essen (DE)
(72) Erfinder: KRABIELL, Kai, D-45529 Hattingen (DE); SCHULTE-SCHULZE-BERNDT, Alfons, D-48455 Bad Bentheim (DE); SCHÄFER, Detlef, D-45478 Mülheim/Ruhr (DE)
(74) Vertreter: Schumacher, Horst, Dr. Dipl.-Phys.
(86) Internationale Anmeldenummer: EP9401990
(87) Internationale Veröffentlichungsnummer: WO9500234

(56) Entgegenhaltungen:
- WO-A-90/07970
- DE-A- 3 803 454
- FR-A- 2 646 788
- GB-A- 2 155 804
- US-A- 4 925 464

## Beschreibung

Die Erfindung betrifft einen Behälter für Kohlenstoffmolekularsieb und eine Vorrichtung, bestehend aus diesen Behältern.

Aus der DE-C-26 52 486 sind Behälter für Kohlenstoffmolekularsieb bekannt, die in einer Druckwechseladsorptionsanlage zur Gewinnung von Stickstoff eingesetzt werden.

Nachteilig hierbei ist, daß das Kohlenstoffmolekularsieb zunächst für den Transport in eine spezielle Verpackung eingefüllt und anschließend in die Behälter der Druckwechseladsorptionsanlage umgefüllt werden muß. Die entleerten Einweg-Transportbehälter lassen sich in der Regel nicht wieder verwenden, sondern müssen entsorgt werden, da diese Restmengen an Kohlenstoffmolekularsieb bzw. Kohlenstoffmolekularsiebstaub enthalten. Aufgrund der hohen Empfindlichkeit des Kohlenstoffmolekularsiebes gegenüber Feuchtigkeit müssen die Transportbehälter gasdicht ausgeführt sein. Das Umfüllen des Kohlenstoffmolekularsiebes ist mit hoher Sorgfalt und entsprechenden Spezialeinrichtungen durchzuführen. Dabei muß verhindert werden, daß das Kohlenstoffmolekularsieb beim Umfüllen bzw. Einfüllen kontaminiert wird. Außerdem muß sichergestellt sein, daß beim Einfüllen eine möglichst hohe Packungsdichte erzielt wird.

Aus der US-A-4,925,464 ist eine Ventilanordnung für eine Zwei-Adsorber-Anlage bekannt, die in der oberen Abdeckeinrichtung der Adsorber angeordnet ist. Eine gasdichte Verschließbarkeit sowie eine Ausbildung zu einem Transportbehälter wird nicht offenbart.

Der Erfindung liegt die Aufgabe zugrunde, einen Behälter bereitzustellen, der gleichzeitig als Transportbehälter dient und der in einer modular aufgebauten Adsorptionsapparatur verwendet werden kann, ohne daß das darin befindliche Kohlenstoffmolekularsieb umgefüllt werden muß.

Diese Aufgabe wird durch die Merkmale des Patentanspruchs 1 gelöst.

Weiterbildungen sind in den Unteransprüchen niedergelegt.

Der erfindungsgemäße Behälter besteht aus einem mittels Stranggußverfahren hergestelltem Hohlprofil. Das Material kann aus Metall, vorzugsweise Aluminium, bestehen, da dieses sich relativ einfach nach dem Stranggußverfahren verarbeiten läßt, ein geringes spezifisches Gewicht bei gleichzeitig hoher Festigkeit aufweist und sich leicht bearbeiten läßt.

Das Hohlprofil kann jedoch auch aus Kunststoff hergestellt werden.

Die Hohlprofile werden auf eine bestimmte Länge geschnitten und am Kopf- und Fußende mit Gewindebohrungen versehen und im Hohlraum an beiden Enden mit einer Siebkonstruktion ausgestattet. Die Siebkonstruktionen zur Fixierung des Kohlenstoffmolekularsiebes können aus Maschendraht, Lochblech, Sintermetall oder Kombinationen derselben bestehen und werden über einen Spannring an beiden Enden des Hohlprofiles fixiert.

Das Kohlenstoffmolekularsieb wird direkt aus der Produktionsanlage des Kohlenstoffmolekularsiebes mit einer speziellen Einfüllvorrichtung in die Behälter eingefüllt. Dabei ist zunächst das untere Ende mit der Siebkonstruktion mit Spannring sowie mit einer Abdeckeinrichtung, bestehend entweder aus einem aufgeschraubten Deckel aus Kunststoff, Papier, Metall oder Verbundmaterial oder einer aufgeklebten gasdichten Folie, verschlossen. Anschließend wird das Kohlenstoffmolekularsieb eingefüllt und das obere Ende des Hohlprofiles nach Einspannen der Siebkonstruktion auf die gleiche Art und Weise wie am unteren Ende des Hohlprofiles gasdicht verschlossen.

Der Behälter mit Kohlenstoffmolekularsieb wird anschließend zum Einsatzort transportiert und in eine modular aufgebaute Adsorptionsapparatur zur Stickstoffgewinnung nach dem Druckwechselverfahren eingesetzt.

Diese Apparatur ist so aufgebaut, daß die Behälter einfach und schnell ausgewechselt werden können. Die modular aufgebaute Adsorptionsapparatur besteht aus oberen und unteren Gaszufuhr- und Gasabfuhrhohlprofilen zwischen denen die erfindungsgemäßen Behälter eingebaut werden. Die Gaszufuhr- und Gasabfuhrhohlprofile sind an den Enden mit Ventilanschlußstutzen bzw. Bohrungen zur Gasführung ausgestattet. An den entsprechenden Stellen innerhalb des Hohlprofiles sind Bohrungen zur Aufnahme von Schrauben zur Befestigung der Behälter vorhanden.

Die erfindungsgemäßen Behälter werden paarweise innerhalb der modular aufgebauten Adsorptionsapparatur zur Stickstoffgewinnung nach dem Druckwechseladsorptionsverfahren eingesetzt, wobei bis zu 20 Paare hintereinander geschaltet werden können. Entsprechend der Anzahl werden die oberen und unteren Gaszufuhr- und Gasabfuhrhohlprofile ausgebildet. Die paarweise Anordnung ermöglicht einen kontinuierlichen Betrieb der Apparatur:

Während eine Seite sich in der Adsorptionsphase befindet, wird die andere Seite regeneriert. Nach einer bestimmten Adsorptions-/Regenerationszeit wird umgeschaltet von der einen auf die andere Seite, so daß die zuvor regenerierte Seite sich dann in der Adsorptionsphase befindet und die zuvor in der Adsorptionsphase befindliche regeneriert wird.

Der mit den erfindungsgemäßen Behältern in der modular aufgebauten Adsorptionsapparatur durchgeführte Druckwechseladsorptionsprozeß zur Stickstoffgewinnung weist mindestens die gleiche Effizienz wie üblicherweise eingesetzte Adsorptionsapparaturen nach dem aus dem Stand der Technik bekannten Zwei-Behälter-System auf. Aufgrund der Modulbauweise läßt sich die Adsorptionsapparatur an den jeweils benötigten Gasbedarf gut anpassen.

Die Erfindung wird nachfolgend anhand der Zeichnung näher beschrieben. Es zeigt die
*Figur 1* den erfindungsgemäßen Behälter und die
*Figur 2* die Anordnung der erfindungsgemäßen Behälter in einer modular aufgebauten Adsorptionsapparatur.

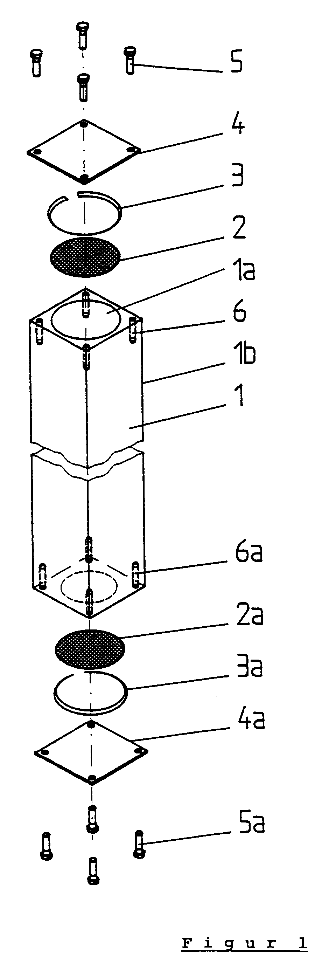

Aus der Figur 1 geht hervor, daß ein Hohlprofil 1, innen einen kreisrunden Querschnitt 1a und außen einen quadratischen Querschnitt 1b aufweist. An beiden Enden des Hohlprofiles 1 sind Siebkonstruktionen 2, 2a zur Fixierung des Kohlenstoffmolekularsiebes, die über Spannringe 3, 3a fixiert werden, angebracht. Das Hohlprofil 1 wird mit Abdeckeinrichtungen 4, 4a mit Schrauben 5, 5a, die in Gewindebohrungen 6, 6a eingeschraubt werden, gasdicht verschlossen.

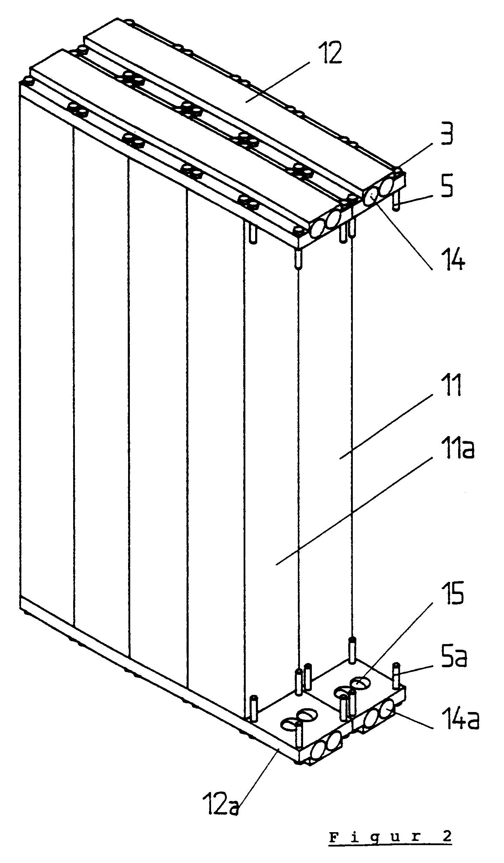

In der Figur 2 ist eine Druckwechseladsorptionsanlage dargestellt, aus der die Anordnung der erfindungsgemäßen Behälter in einer modular aufgebauten Adsorptionsapparatur zur Stickstoffgewinnung hervorgeht. Die Behälter 11, 11a sind paarweise in beliebiger Anzahl angeordnet. An beiden Enden werden sie durch ein Gaszufuhr- und Gasabfuhrhohlprofil 12, 12a mit Ventilanschlußstutzen 14, 14a und Bohrungen 15 verschlossen. Dabei können die Schrauben 5, 5a (Figur 1) zur Fixierung der Behälter in der Druckwechseladsorptionsapparatur verwendet werden. Die Druckwechseladsorptionsanlage kann wie eine bekannte Zwei-Behälter-Anlage betrieben werden.

### Bezugszeichenliste

- 1: Hohlprofil
- 1a: kreisrunder Querschnitt
- 1b: quadratischer Querschnitt
- 2: Siebkonstruktion
- 2a: Siebkonstruktion
- 3: Spannring
- 3a: Spannring
- 4: Abdeckeinrichtung
- 4a: Abdeckeinrichtung
- 5: Schraube
- 5a: Schraube
- 6: Gewindebohrung
- 6a: Gewindebohrung
- 11: Behälter
- 11a: Behälter
- 12: Gaszufuhrhohlprofil
- 12a: Gasabfuhrhohlprofil
- 14: Ventilanschlußstutzen
- 14a: Ventilanschlußstutzen
- 15: Bohrungen

## Patentansprüche

1. Behälter mit Kohlenstoffmolekularsieb, wobei ein Hohlprofil (1), mit einem, vorzugsweise kreisrunden, Innenquerschnitt (1a) und einem rechteckigen oder quadratischen Außenquerschnitt (1b), an beiden Enden mittels Abdeckeinrichtungen (4, 4a) mit Schrauben (5, 5a) und mit im Hohlprofil (1) angeordneten Gewindebohrungen (6, 6a) zur Aufnahme der Schrauben (5, 5a), gasdicht verschließbar, ausgebildet ist und
wobei an beiden Enden des Hohlprofils (1) zwischen dem Hohlprofil (1) und einer Abdeckeinrichtung (4, 4a) eine Siebkonstruktion (2, 2a) zur Fixierung des Kohlenstoffmolekularsiebes, die über einen Spannring (3, 3a) fixiert wird, vorgesehen ist.

2. Behälter nach Anspruch 1, **dadurch gekennzeichnet**, daß das Hohlprofil (1) aus Metall, vorzugsweise Aluminium, besteht.

3. Behälter nach Anspruch 1, **dadurch gekennzeichnet**, daß das Hohlprofil (1) aus Kunststoff besteht.

4. Behälter nach Anspruch 1, 2 oder 3, **dadurch gekennzeichnet,** daß die Siebkonstruktionen (2, 2a) aus Maschendraht, Lochblech, Sintermetall oder aus Kombinationen derselben bestehen.

5. Behälter nach einem oder mehreren der vorhergehenden Ansprüche 1 bis 4, **dadurch gekennzeichnet**, daß die Abdeckeinrichtungen (4, 4a) aus Metall, Kunststoff, Papier oder Verbundmaterial bestehen.

6. Behälter nach einem oder mehreren der vorhergehenden Ansprüche 1 bis 5, **dadurch gekennzeichnet**, daß die Abdeckeinrichtungen (4, 4a) aus aufgeklebter gasdichter Folie bestehen.

7. Druckwechseladsorptionsanlage, bestehend aus Behältern nach Anspruch 1, **dadurch gekennzeichnet**, daß die Behälter (11, 11a) in einer modular aufgebauten Adsorptionsapparatur zur Stickstoffgewinnung nach dem Druckwechselverfahren mit Gaszufuhr- und Gasabfuhrhohlprofilen (12, 12a), die mit Ventilanschlußstutzen (14, 14a) und Bohrungen (15) versehen sind, angeordnet sind.

8. Druckwechseladsorptionsanlage nach Anspruch 7, dadurch gekennzeichnet, daß die Behälter (11, 11a) der modular aufgebauten Adsorptionsapparatur paarweise ausgebildet sind.

## Claims

1. A container with a carbon molecular sieve, wherein a hollow section (1) with a, preferably circular, internal cross-section (1a) and a rectangular or square external cross-section (1b) is closeable in a gas-tight manner at both ends by means of covering devices (4, 4a) with screws (5, 5a) and with tapped bores (6, 6a) arranged in the hollow section (1) to receive the screws (5, 5a), and wherein a screen structure (2, 2a), which is to keep the carbon molecular sieve in place and is kept in place by a clamping ring (3, 3a), is provided at both ends of the hollow section (1), between the hollow section (1) and a covering device (4, 4a).

2. A container in accordance with Claim 1, characterised in that the hollow section (1) is composed of metal, preferably aluminium.

3. A container in accordance with Claim 1, characterised in that the hollow section (1) is composed of plastics material.

4. A container in accordance with Claim 1, 2 or 3, characterised in that the screen structures (2, 2a) are composed of wire mesh, perforated sheet metal, sintered metal or combinations thereof.

5. A container in accordance with one or more of the preceding Claims 1 to 4, characterised in that the covering devices (4, 4a) are composed of metal, plastics material, paper or composite material.

6. A container in accordance with one or more of the preceding Claims 1 to 5, characterised in that the covering devices (4, 4a) are composed of stuck-on, gas-tight foil.

7. A pressure swing adsorption unit comprising containers in accordance with Claim 1, characterised in that the containers (11, 11a) are arranged in an adsorption apparatus ― of modular design ― which is for obtaining nitrogen in accordance with the pressure swing process and has gas supply and gas removal hollow sections (12, 12a) provided with valve connecting branches (14, 14a) and bores (15).

8. A pressure swing adsorption unit in accordance with Claim 7, characterised in that the containers (11, 11a) of the adsorption apparatus ― of modular design ― are in pairs.

## Revendications

1. Contenant avec un tamis moléculaire au carbone, dans lequel un profilé creux (1), ayant une section transversale intérieure (1a), de préférence circulaire ronde, et une section transversale extérieure (1b), rectangulaire ou quadratique, est réalisé d'une façon pouvant être fermé de façon étanche au gaz, aux deux extrémités, au moyen de dispositifs de recouvrement (4, 4a), à l'aide de vis (5, 5a), et à l'aide de perçages taraudés (6, 6a) ménagés dans le profilé creux (1) pour recevoir les vis (5, 5a) et, aux deux extrémités du profilé creux (1), entre le profilé creux (1) et un dispositif de recouvrement (4, 4a) est prévue une construction à tamis (2, 2a), pour assurer la fixation du tamis moléculaire au carbone, qui est fixé par l'intermédiaire d'un anneau de serrage (3, 3a).

2. Contenant selon la revendication 1, caractérisé en ce que le profilé creux (1) est constitué en métal, de préférence en aluminium.

3. contenant selon une ou plusieurs des revendications précédentes, caractérisé en ce que le profilé creux (1) est constitué en matière plastique.

4. Contenant la revendication 1, 2 ou 3, caractérisé en ce que les constructions à tamis (2, 2a) sont constituées de mailles de fils métalliques, d'une tôle perforée, de métal fritté, ou bien d'une combinaison de ceux-ci.

5. Contenant les revendications 1 à 4 précédentes, caractérisé en ce que les dispositifs de recouvrement (4, 4a) sont constitués en métal, en matière plastique, en papier, ou en un matériau composite.

6. Contenant selon une ou plusieurs des revendications 1 à 5 précédentes, caractérisé en ce que les dispositifs de recouvrement (4, 4a) sont constitués d'une feuille étanche aux gaz appliquée par collage.

7. Installation d'absorption à échange de pression, constituée de contenants selon la revendication 1, caractérisée en ce que les contenants (11, 11a) sont disposés dans un appareil d'absorption à construction modulaire pour la récupération de l'azote selon le procédé à échange de pression, avec des profilés creux d'amenée de gaz et d'évacuation de gaz (12, 12a) qui sont pourvus de tubulures de raccordement de soupapes (14, 14a) et de perçages (15).

8. Installation d'absorption à échanges de pression, constituée de contenants selon la revendication 7 caractérisée en ce que l'appareil d'absorption à construction modulaire sont réalisés à l'aide de paires de contenants.
